# EUROPEAN PATENT SPECIFICATION

(11) **EP 1 338 205 B1**
(45) Date of publication and mention of the grant of the patent: **31.08.2005**
(21) Application number: 03000001.2
(22) Date of filing: 02.01.2003
(51) Int. Cl.: A23B 7/155, A23B 4/22, A23L 1/03, A23L 1/212, A23L 1/218, A23L 3/3571

(54) **Lactobacillus for preservation of food products**
Lactobacillus zur Konservierung von Nahrungsmitteln
Lactobacillus pour la conservation de denrées alimentaires

(30) Priority: 04.01.2002 IT MO20020001
(43) Date of publication of application: 27.08.2003
(73) Proprietor: Zanaglia, Giuliano, 41021 Fanano (Modena) (IT); Zaniboni, Roberto, 46020 Pieve Di Coriano (Mantova) (IT)
(72) Inventor: Zanaglia, Giuliano, 41021 Fanano (Modena) (IT); Zaniboni, Roberto, 46020 Pieve Di Coriano (Mantova) (IT)
(74) Representative: Modiano, Guido

(56) References cited:
- EP-A- 0 698 348
- VESCOVO M ET AL: "Application of antimicrobial-producing lactic acid bacteria to control pathogens in ready-to-use vegetables." JOURNAL OF APPLIED BACTERIOLOGY, vol. 81, no. 2, 1996, pages 113-119, XP009007306 ISSN: 0021-8847
- VESCOVO MARISA ET AL: "Combined effects of Lactobacillus casei inoculum, modified atmosphere packing and storage temperature in controlling Aeromomas hydrophila in ready-to-use vegetables." INTERNATIONAL JOURNAL OF FOOD SCIENCE & TECHNOLOGY, vol. 32, no. 5, October 1997 (1997-10), pages 411-419, XP009007365 ISSN: 0950-5423
- SCOLARI G ET AL: "Partial characterization and plasmid linkage of a non-proteinaceous antimicrobial compound in a Lactobacillus casei strain of vegetable origin." JOURNAL OF APPLIED MICROBIOLOGY, vol. 86, no. 4, April 1999 (1999-04), pages 682-688, XP002234316 ISSN: 1364-5072
- VIGNOLO G ET AL: "Control of Listeria monocytogenes in ground beef by 'Lactocin 705', a bacteriocin produced by Lactobacillus casei CRL 705." INTERNATIONAL JOURNAL OF FOOD MICROBIOLOGY, vol. 29, no. 2-3, 1996, pages 397-402, XP002234317 ISSN: 0168-1605
- RODGERS S: "Preserving non-fermented refrigerated foods with microbial cultures-a review" TRENDS IN FOOD SCIENCE AND TECHNOLOGY, ELSEVIER SCIENCE PUBLISHERS, GB, vol. 12, no. 8, August 2001 (2001-08), pages 276-284, XP004357930 ISSN: 0924-2244
- HUGAS M ET AL: "APPLICATION OF THE BACTERIOCINOGENIC LACTOBACILLUS SAKEI CTC494 TO PREVENT GROWTH OF LISTERIA IN FRESH AND COOKED MEAT PRODUCTS PACKEDWITH DIFFERENT ATMOSPHERES" FOOD MICROBIOLOGY, ACADEMIC PRESS LTD, LONDON, GB, vol. 15, no. 6, 1998, pages 639-650, XP000982835 ISSN: 0740-0020

## Description

The present invention relates to the natural microorganism *Lactobacillus casei* LMG P-21007 and to its use for the preservation of vegetable products, fish products, and animal-derived products, mixtures thereof, derivatives of vegetable products, fish products, and animal-derived products and mixtures thereof, and particularly, but not exclusively, for the preservation of salads and fish, such as salmon, by controlling the pathogenic and decaying bacterial load.

Category-IV vegetable products are becoming increasingly widespread. It is known that the bacterial load present in these products depends on their origin, on the conditions in which they are collected or cultivated, et cetera. Storage conditions (humidity, cut leaves) also facilitate the increase of the bacterial load. During storage and refrigeration, the many cuts on the surface of the products, the high humidity and the gaseous atmosphere that is generated inside the packages facilitate the development of Gram-negative microorganisms, which cause deterioration of the products and proliferation of pathogens. For vegetable products, in order to contrast development of the bacterial load, chlorine is used in washing said products. The use of chlorine, besides not being allowed by all countries, can alter the organoleptic properties of the vegetable products. Finally, some pathogens are capable of proliferating even after washing the vegetables with chlorine and after preserving them at low temperature.

The use of a modified atmosphere is an alternative means to preserve the organoleptic and commercial qualities of vegetable products, fish products, and animal-derived products, and to ensure their more durable preservation. However, the use of a modified atmosphere, which is considered an efficient means for extending the preservation time of food products, including category-IV vegetables, and for maintaining their organoleptic and commercial qualities, entails risks regarding microbiological safety, since some pathogens can develop or be stimulated even in certain modified atmospheres and at low temperature.

The use of microorganisms of the species *Lactobacillus casei* for controlling the pathogenic and decaying bacterial load has been described in the following articles:
- VESCOVO M ET AL: 'Application of antimicrobial-producing lactic acid bacteria to control pathogens in ready-to-use vegetables.' JOURNAL OF APPLIED BACTERIOLOGY, vol. 81, no. 2, 1996, pages 113-119, XP009007306 ISSN: 0021-8847
- VESCOVO MARISA ET AL: 'Combined effects of *Lactobacillus casei* inoculum, modified atmosphere packing and storage temperature in controlling Aeromomas hydrophila in ready-to-use vegetables.' INTERNATIONAL JOURNAL OF FOOD SCIENCE & TECHNOLOGY, vol. 32, no. 5, October 1997 (1997-10), pages 411-419, XP009007365 ISSN: 0950-5423
- SCOLARI G ET AL: 'Partial characterization and plasmid linkage of a non- proteinaceous antimicrobial compound in a *Lactobacillus casei* strain of vegetable origin.' JOURNAL OF APPLIED MICROBIOLOGY, vol. 86, no. 4, April 1999 (1999-04), pages 682-688, XP002234316 ISSN: 1364-5072
- VIGNOLO G ET AL: 'Control of *Listeria monocytogenes* in ground beef by 'Lactocin 705', a bacteriocin produced by *Lactobacillus casei* CRL 705.' INTERNATIONAL JOURNAL OF FOOD MICROBIOLOGY, vol. 29, no. 2-3, 1996, pages 397-402, XP002234317 ISSN: 0168-1605
- RODGERS S: 'Preserving non-fermented refrigerated foods with microbial cultures-a review' TRENDS IN FOOD SCIENCE AND TECHNOLOGY, ELSEVIER SCIENCE PUBLISHERS, GB, vol. 12, no. 8, August 2001 (2001- 08), pages 276-284, XP004357930 ISSN: 0924-2244

The expression "Category-IV vegetable products" is used to designate, in this context, fruit, vegetables, garden greens, and other edible plant products ready for use that cannot be defined as fruit, vegetables and garden greens, while the expression "fish products and animal-derived products" is used to designate, in this context, fish, shellfish, mollusks, poultry, swine, bovines, ovines, equines and any other edible animal.

The expression "derivatives of vegetable products, fish products, and animal-derived products" designates preferably but not exclusively products derived from their processing, such as juices, concentrates, sauces, preserves, et cetera.

The aim of the present invention is to allow a more durable preservation of vegetable products, fish products and animal-derived products, of mixtures thereof, of derivatives of vegetable products, fish products and animal-derived products and of mixtures thereof, without losing their organoleptic and commercial qualities (appearance, color, taste, et cetera).

An object of the present invention is to control the pathogenic and decaying bacterial load, which is the main cause of the loss of the qualities.

This aim and this and other objects are achieved by microorganism LMG P-21007, the microorganism being characterized in that it belongs to the class of non-spore-forming microaerophilic Gram-positive bacteria, to the genus *Lactobacillus*, and to the species *casei,* type strain LMG P-21007. The lactobacillus according to the invention is capable of preserving vegetable products, fish products and animal-derived products, mixtures thereof and derivatives of vegetable products, fish products and animal-derived products and mixtures thereof by controlling the development of the pathogenic and decaying bacterial load, and is capable of performing the inhibitory function over a wide temperature range.

The development temperature of LMG P-21007 is preferably between 20 °C and 44 °C, more between 25 °C and 44 °C, even more preferably between 36 °C and 38 °C, and in a particularly preferred manner is specifically 37 °C.

Another aspect of the invention relates to the use of microorganism LMG P-21007 to preserve vegetable products, fish products and animal-derived products, mixtures thereof, derivatives of vegetable products, fish products and animal-derived products and mixtures thereof to control the development of the decaying bacterial load and to control the development of the pathogenic bacterial load.

The microorganism can be used in an ambient atmosphere and a protective atmosphere, preferably a protective atmosphere. The protective atmosphere preferably comprises between 10% and 20% CO₂ and N₂ for the remaining fraction.

Preferably, the microorganism is used fresh, frozen or freeze-dried, more preferably fresh. The use of one form rather than the other depends on the contingent conditions, such as production time, transport time and utilization time, which the person skilled in the art shall be able to assess in each instance.

The temperature for the inhibitory activity of the microorganism can vary between 4 °C and 44 °C, preferably between 4 °C and 12 °C, more preferably between 4 °C and 8 °C.

The invention relates to the use of microorganism LMG P-21007 in relation to vegetable products, fish products and animal-derived products, mixtures thereof, derivatives of vegetable products, fish products and animal-derived products and mixtures thereof.

The invention relates to horticultural products, preferably vegetables, particularly salads. Other vegetables particularly considered are soy sprouts.

The invention relates to fish products and animal-derived products, preferably flesh of fish, particularly salmons, shellfish, mollusks and meat of poultry, particularly turkey, bovines, swine, equines and ovines.

The invention relates to control of the pathogenic and decaying bacterial load particularly with regard to the group of *Enterococci,* coliform bacteria, *Pseudomona Daceae**, Listeria, Staphylococcus.*

Another aspect of the invention relates to a food product comprising LMG P-21007 and one or more vegetable products, fish products and animal-derived products, derivatives of vegetable products, fish products and animal-derived products and mixtures thereof. Category-IV vegetable products are particularly horticultural products, preferably greens, particularly salads and mixtures thereof. Moreover, one vegetable is preferably the soy sprout.

The fish products and animal-derived products are preferably flesh of fish, particularly salmons, shellfish and mollusks, and meat of poultry, particularly turkey, bovine meat, swine meat, equine meat and ovine meat.
Figure 1 is a photograph of LMG P-21007, viewed with a scanning electron microscope with 8000X magnification.
Figure 2 shows the electrophoretic mobility of Pep X in the strains *Lactobacillus casei* ATCC 334 and LMG P-21007.
Figure 3 shows the inhibitory activity of LMG P-21007 with respect to *Staphylococcus aureus* IMPC SA4.
Figure 4 shows the molecular weight of the individual bands of the Supercoiled DNA Ladder (GIBCO-BRL) marker.
Figure 5 shows the plasmid profile of LMG P-21007.
Figure 6 shows the plasmid profile of various strains of lactobacilli of different species.
Figure 7 shows the profile of the genomic DNA of LMG P-21007.

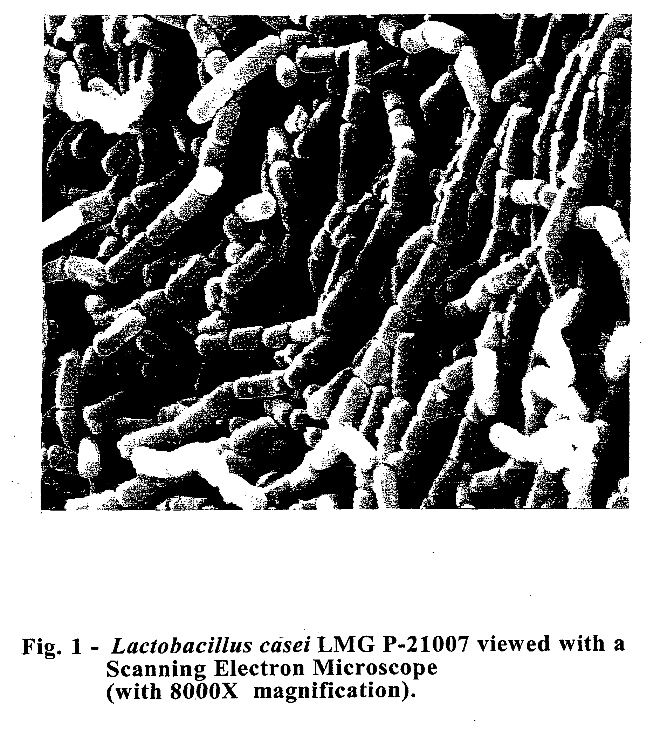

The microorganism LMG P-21007 was isolated by the inventors from Category-IV fresh vegetables. Isolation was performed on agarized MRS (Difco) medium, specific for lactic bacteria. The microorganism LMG P-21007 thus obtained is preserved frozen (-20 °C) or freeze-dried. The strain was characterized by usual phenotype and genetic assays. Strain morphology was observed both under a phase- contrast optical microscope and under a scanning electron microscope (SEM Mod. HITACHI S2300) and is the typical morphology of the species *Lactobacillus casei.* The images obtained under the SEM with 8000X magnification are shown in Figure 1.

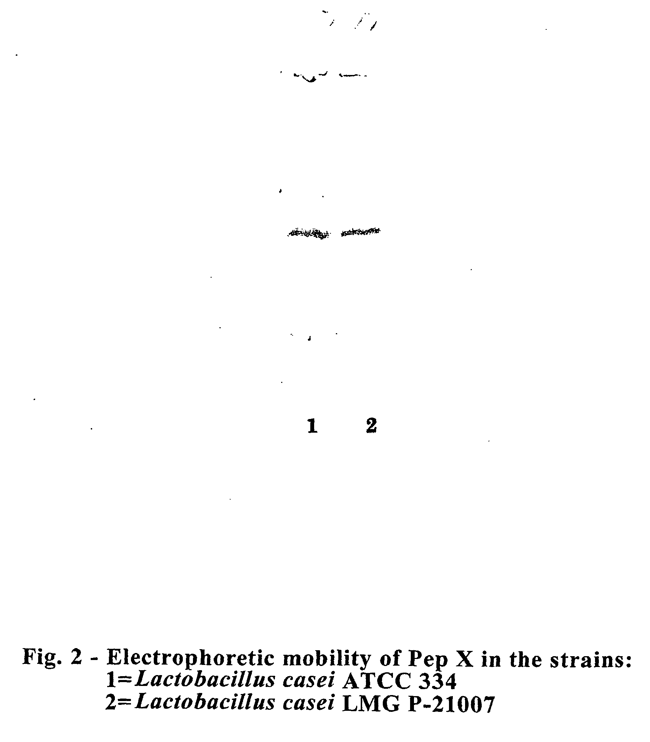

The following were also determined: the fermenting conditions of the carbohydrates, the isomer type of the lactic acid (L-lactic acid) and the electrophoretic mobility of the intracellular enzyme X-prolyl-dipeptidyl aminopeptidase Pep X. The latter is shown in Figure 2, which compares the electrophoretic mobility of Pep X of LMG P-21007 with the mobility of *Lactobacillus casei* ATCC 334.

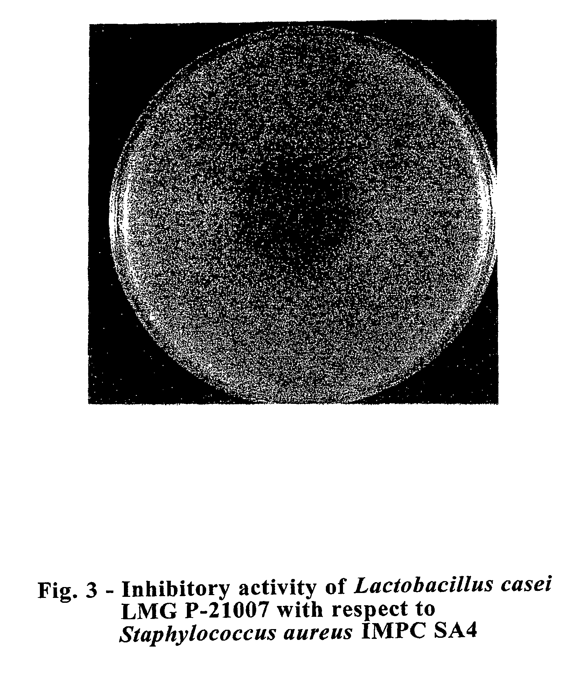

The resistance to antibiotics of the strain LMG P-21007 and the range of the *in vitro* inhibitory activity of LMG P-21007 against Gram+ and Gram- indicator microorganisms were also determined. Figure 3 shows the inhibitory activity of LMG P-21007 against *Staphylococcus aureus* IMPC SA4, which can be assessed from the inhibition halo clearly visible in the figure.

The temperature for satisfactory development of LMG P-21007 is between 20 °C and 44 °C, is between 25 °C and 44 °C for better development, is between 36 °C and 38 °C for optimum development, and is specifically 37 °C.

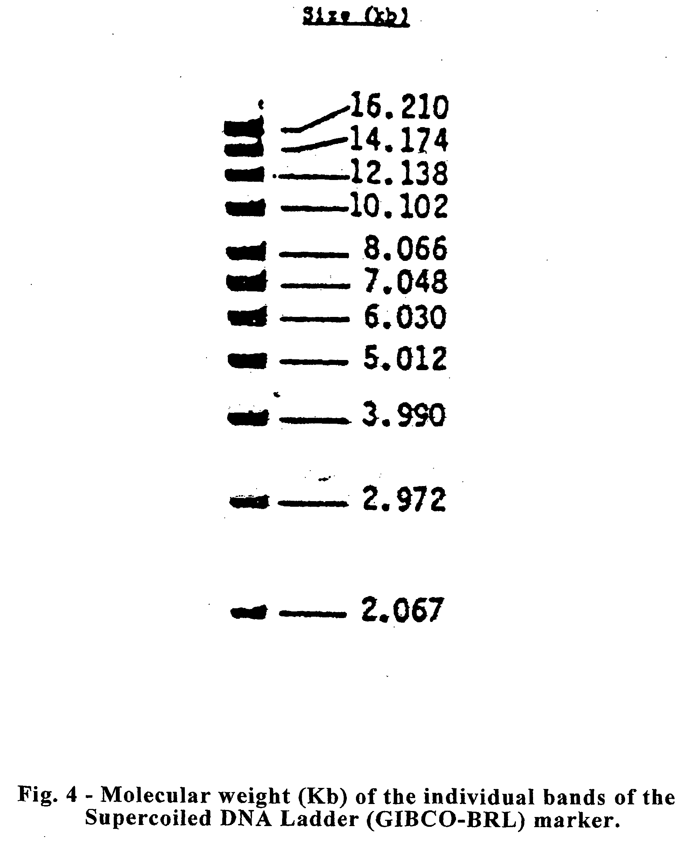

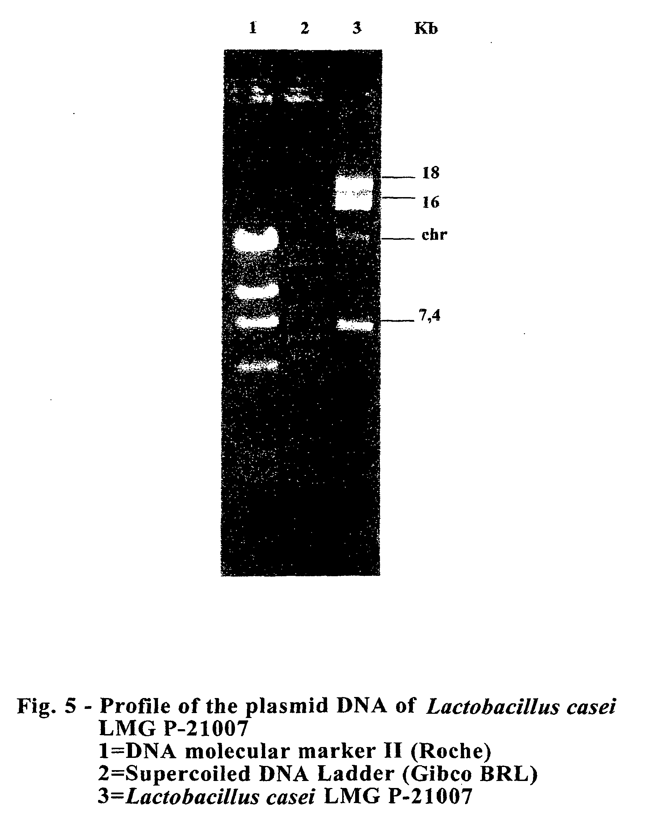

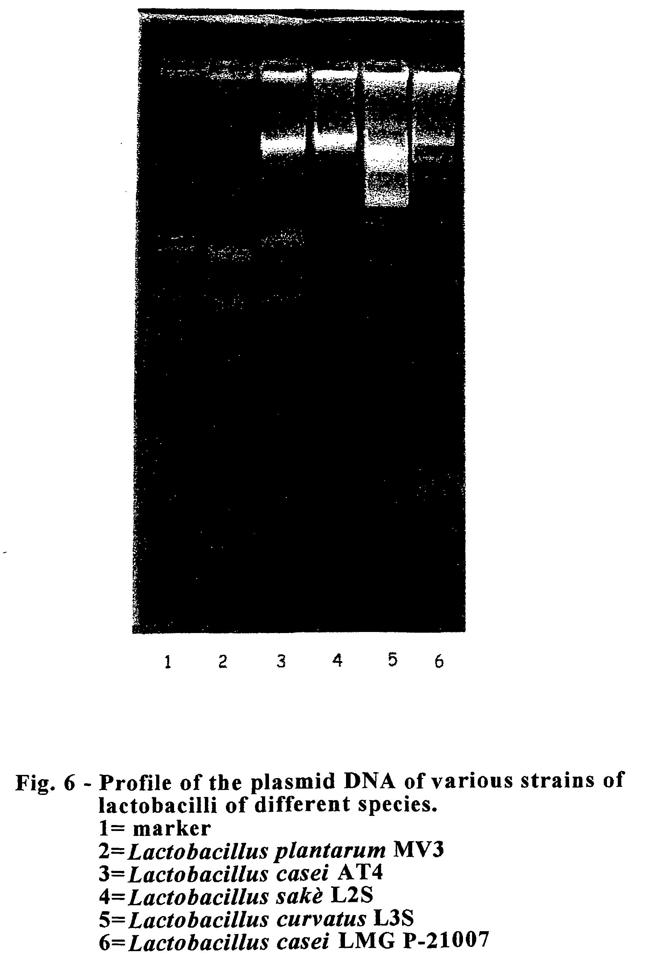

The genetic characteristics of LMG P-21007 were also assessed; in particular, analysis of plasmid DNA was conducted and the genomic DNA profile was determined (for LMG P-21007). Figure 4 presents the molecular weight of the individual bands of the Supercoiled DNA Ladder (GIBCO-BRL) marker. Figure 5 shows instead the plasmid DNA profile of LMG P-21007. In particular, well 1 shows the profile of DNA molecular marker II (ROCHE), well 2 shows the profile of the Supercoiled DNA Ladder (GIBCO-BRL), and well 3 shows the plasmid DNA profile of LMG P-21007. Figure 6 shows the plasmid profile of various strains of lactobacilli of different species. Each profile corresponds to a single strain of lactobacillus:
1. Marker
2. *Lactobacillus plantarum* MV3
3. *Lactobacillus casei* AT4
*4. Lactobacillus sakè* L2S
5. *Lactobacillus curvatus* L3S
6. LMG P-21007.

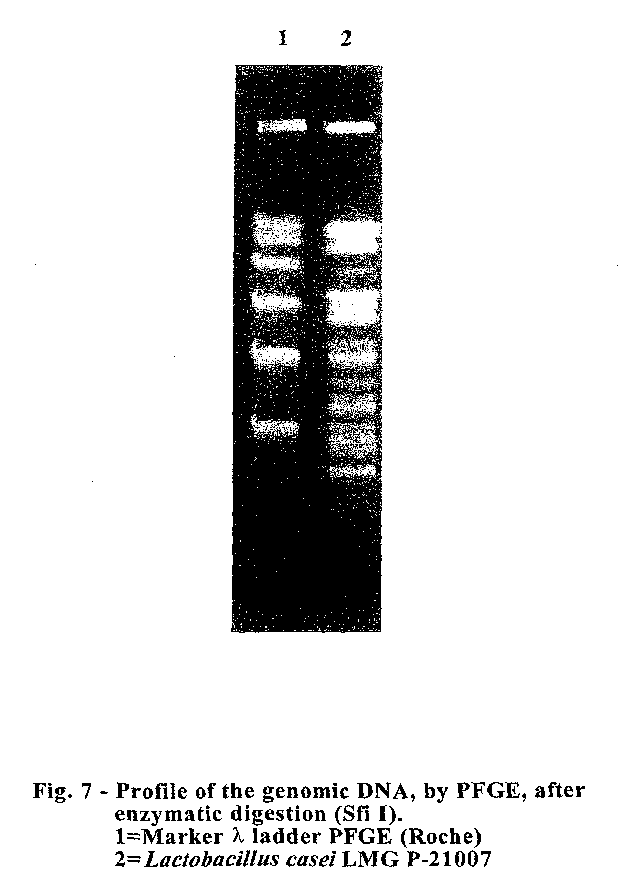

The profile of the genomic DNA of LMG P-21007 was determined after enzymatic digestion of chromosomal DNA with Sfi I enzyme. The first well of Figure 7 indicates the profile of the marker used: λ Ladder PFGE (Roche), while the second well shows the profile of the chromosomal DNA of LMG P-21007.

Tests were also conducted to evaluate the activity of LMG P-21007 against *Pseudomonas,* fecal and total coliform bacteria in Category-IV salads and in soy sprouts. An aqueous bacterial suspension at a suitable concentration was nebulized onto the vegetables. One gram of biomass having a cell content of 1x10¹¹ CFU/g (CFU = colony forming unit) can be resuspended in H₂O to obtain a suspension sufficient to treat 100 Kg of whole-leaf or cut-leaf product.

The nebulized product is partially dried before packaging in order to remove the excess moisture added with the nebulization process. To perform the comparison between the microbial load of the product treated with freeze-dried or frozen biomass and the load of the product treated with chlorine, the concentrations of fecal and total coliforms and *Pseudomonas* were determined at the time t₀ (directly after nebulization) and at the end of shelf life, which is equal to 5+1 days after the packaging date. The results indicate a significant control of the bacterial load in vegetables treated with LMG P-21007 with respect to vegetables washed with chlorine. Particularly significant results are achieved in the case of rocket, in which total coliforms are found to decrease with respect to t₀, and for soy sprouts, because 5+1 days after the packaging date the bacterial load for fecal and total coliforms is less than 10⁴.

The following examples merely illustrate the present invention and must not be understood in a restrictive sense for the present invention.

### Example 1:

### Preparation of the strain

The LMG P-21007 strain is cultured in MRS (Difco) medium specific for lactic bacteria, using an inoculum of 1% of a pre-culture in the same medium prepared recently. After 14 hours of fermentation at 37 ° C, cell density reaches values of 1 to 4 x 10⁹ CFU/ml.

The biomass is separated from the culture medium after correcting the pH to neutrality.

The resulting cells can be preserved:
- frozen at -20 °C
- freeze-dried after adding a protective agent composed of 5% dextrin, 10% soy peptone, 0.2 % yeast extract.

### Example 2:

### Fermenting conditions of carbohydrates of LMG P-21007.

The fermenting conditions of carbohydrates were determined by means of the API 50 CHL system (Biomerieux, France). The results were read after 48 hours of incubation of the tunnels at 37 °C in anaerobic conditions. The results are given in Table 1. The fermenting conditions of carbohydrates were also determined in a minimum medium with the addition of each individual carbohydrate in order to confirm fermentation by means of the API system.

**TABLE 1**

| *SUGARS* | *LMG P-21007* |
|---|---|
| Control | - |
| | |
| Glycerol | ± |
| Erythriol | - |
| D-arabinose | - |
| L-arabinose | - |
| Ribose | + |
| D-xylose | - |
| L-xylose | - |
| Adonitol | - |
| β-methylxyloside | - |
| Galactose | + |
| D-glucose | + |
| D-fructose | + |
| D-mannose | + |
| L-sorbose | + |
| Rhamnose | - |
| Dulcitol | - |
| Inositol | ± |
| Mannitol | + |
| Sorbitol | + |
| Alpha-methyl-D-mannoside | - |
| Alpha-methyl-D-glucoside | + |
| N-acetylglucosamide | + |
| Amygdalin | + |
| Arbutin | + |
| Esculin | + |
| Salicin | + |
| Cellobiose | + |
| Maltose | + |
| Lactose | + |
| Melibiose | - |
| Saccharose | ± |
| Trealose | + |
| Inulin | - |
| Melezitose | + |
| D-raffinose | - |
| Starch | - |
| Glycogen | - |
| Xylitol | - |
| β-gentiobiose | ± |
| D-turanose | + |
| D-lyxose | - |
| D-tagatose | + |
| D-fucose | - |
| L-fucose | - |
| D-arabitol | - |
| L-arabitol | - |
| Gluconate | ± |
| 2-ketogluconate | - |
| 5-ketogluconate | - |

### Example 3:

### Electrophoretic mobility of intracellular enzyme X-prolyl-dipeptidyl aminopeptidase PepX of LMG P-21007.

In order to confirm the taxonomic position of the strain, the electrophoretic mobility of the intracellular enzyme X-prolyl-dipeptidyl aminopeptidase PepX was analyzed. The enzyme was extracted by mechanical rupture of the cells with ultrasound (Labsonic Brown mod. 1510 ultrasound generator). The cytoplasmic fraction containing the enzyme was subjected to separation on polyacrylamide gel in non-denaturating conditions. After electrophoresis, the mobility of the enzyme was determined by histochemical staining, obtained by means of a suitable chromogenic substrate specific for Pep X activity. After staining, the mobility of Pep X of strain LMG P-21007 was compared with the mobility of strains of collected *Lactobacillus casei.* Figure 2 shows the comparison gel.

### Example 1:

### Determination of resistance to antibiotics of strain LMG P-21007.

Determination of resistance to antibiotics of strain LMG P-21007 was performed by means of the plate diffusion method, following the indications of Kirby-Bauer for quantitative evaluation. The results are given in Table 2.

**TABLE 2**

| *ANTIBIOTIC* | *DOSE (I.U.)* | *DIAMETER* | *SENSITIVITY* |
|---|---|---|---|
| **β-lactamines** | | | |
| Penicillin G | 10 | 15 | S |
| Ampicillin | 10 | 12 | R |
| Cloxacillin | 5 | 0 | R |
| Cephaloridine | 30 | 0 | R |

| **Aminosides** | | | |
|---|---|---|---|
| Streptomycin | 10 | 0 | R |
| Neomycin | 30 | 0 | R |
| Kanamycin | 30 | 0 | R |
| Gentamycin | 10 | 0 | R |

| **Tetracyclines** | | | |
|---|---|---|---|
| Tetracycline | 30 | 15 | R |
| Oxytetracycline | 30 | 18 | R |

| **Macrolidesx** | | | |
|---|---|---|---|
| Spiramycin | 100 | 15 | S |
| Lincomycin | 2 | 8 | R |

| **Phenicols** | | | |
|---|---|---|---|
| Chloramphenicol | 30 | 22 | S |

| **Riframycins** | | | |
|---|---|---|---|
| Riframycin | 30 | 23 | S |

| **Others** | | | |
|---|---|---|---|
| Novobiocin | 20 | 0 | S |
| Vancomycin | 30 | 0 | R |

| **Polypeptides** | | | |
|---|---|---|---|
| Colistin | 10 | 0 | R |
| Bacitracin | 10 | 0 | R |
| S=Sensitive | | | |
| R=Resistant | | | |

### Example 5:

### Determination of the optimum development temperature of LMG P-21007.

To determine the optimum development temperature, LMG P-21007 was incubated for 24 h in liquid MRS medium at different temperatures in a multi-thermostat arrangement. Intensity of development was determined by spectrophotometric reading at the wavelength of 560 nm. The values found are given in Table 3. The values show a satisfactory development of the strain at temperatures between 20 °C and 44 °C and optimum development at temperatures between 25 °C and 44 °C.

**TABLE 3**

| *DEVELOPMENT TEMPERATURE (°C)* | *INTENSITY OF DEVELOPMENT (OD560nm)* | |
|---|---|---|
| | T0 | T2 |
| 4 | 0.057 | 0.070 |
| 8 | 0.059 | 0.269 |
| 12 | 0.083 | 0.410 |
| 20 | 0.047 | 1.280 |
| 25 | 0.059 | 1.487 |
| 30 | 0.077 | 1.600 |
| 37 | 0.075 | 1.616 |
| 44 | 0.071 | 1.430 |
| 50 | 0.060 | 0.199 |

### Example 6:

### Inhibition spectrum of LMG P-21007

The spectrum of the inhibitory activity in vitro of LMG P-21007 against Gram+ and Gram- indicator microorganisms was obtained by means of plate diffusion tests. The assay was performed at 8 °C and at 37 °C. The indicator strains and the results are given in Table 4. Figure 3 presents the inhibitory activity of LMG P-21007 against *Staphylococcus aureus* IMPC SA4.

**TABLE 4**

| *INDICATOR MICROORGANISMS* | *HALO Ø mm* | *INHIBITION* |
|---|---|---|
| | 8 °C | 37 °C |
| Gram+ microorganisms | | |
| Lactobacillus helveticus ATCC 15009 | - | - |
| Lactobacillus reuteri DSM 20016 | - | - |
| Lactobacillus plantarum NCDO 1193 | 10 | 9 |
| Lactobacillus casei ATCC 334 | 8 | 12 |
| Lactobacillus acidophilus ATCC 4356 | 9 | 10 |
| Leuconostoc spp. | - | - |
| Staphylococcus aureus IMPC SA4 | 23 | 21 |
| Listeria monocytogenes EG | 8 | 12 |

| Gram- microorganisms | | |
|---|---|---|
| Aeromonas hydrophila 2 | 10 | 14 |
| Salmonella typhimurium G | 2 | 7 |
| Citrobacter freundii IMPC CF2 | 8 | 12 |
| Enterobacter cloacae IMPC CF3 | 10 | 15 |
| Escherichia coli IMPC CT4 | 6 | 10 |

### Example 7:

### Analysis of plasmid DNA of the strain of LMG P-21007.

Analysis of the plasmid DNA of the strain of LMG P-21007 was conducted by using the lysis method described by Anderson and Mc Key; Supercoiled DNA Ladder (GIBCO-BRL) was used as reference marker for molecular weights. Figure 4.

Figure 5 shows the profile of the plasmid DNA of LMG P-21007 and Figure 6 shows the profiles of the plasmid DNA of LMG P-21007 in comparison with strains that belong to other mesophilic species.

### Example 8:

### Profile of genomic DNA of the strain of LMG P-21007.

The profile of the genomic DNA of the strain of LMG P-21007 was obtained by enzymatic digestion of chromosomal DNA with Sfi I enzyme according to the indications of Ferrero et al. and analyzed by pulsed-field electrophoresis (PFGE). λ Ladder PFGE (Roche) was used as marker.

The electrophoretic conditions were:

| | |
|---|---|
| gradient | 4.5 V/cm |
| process time | 24h |
| switch time | 1→20 sec |
| ramping factor | linear |
| included angle | 120° |
| agarose | 1% |
| TBE | 0.5 x |
| Temperature | 14 °C |

Figure 7 shows the profile of the genomic DNA of LMG P-21007.

### Example 9:

### Assessment of the activity of LMG P-21007 in Category-IV salads against coliform bacteria and Pseudomonas.

Frozen and freeze-dried LMG P-21007 was used (see Example 1).

The quantity of LMG P-21007 to be added to the product to be treated was programmed so as to obtain a cell concentration of 10⁶ CFU/ml on the product. This result was achieved by dispersing the biomass in a quantity of water proportional to the fermentation yield. The fermentation yield was calculated from the microbial count of the biomass of LMG P-21007.

The resulting aqueous bacterial suspension was nebulized onto the salads.

Before packaging, the excess moisture added with the nebulization process was removed so that the preservation conditions in the various tests were comparable.

To perform the comparison between the microbial load of the product treated with freeze-dried or frozen biomass and the load of the product treated with chlorine, the concentrations of coliforms and *Pseudomonas* were determined at the time t₀ (directly after nebulization) and at the expiry of the shelf life, which is equal to 5+1 days after the packaging date.

The composition of the protective atmosphere was set during packaging:
- CO₂ : 10%-20%
- N₂: the remaining fraction.

The values of the samples at t₀ refer to the product washed only with potable water, without sodium hypochlorite, to assess whether the treatment with lactobacillus is equivalent to the treatment with chlorine.

The results obtained for the individual salads are given in the following tables:

### FRENCH SCORZONERA (Reichardia picroides)

| | Coliforms (t₀=8.0x10²) | Pseudomonas (t₀=1.5x10⁴) |
|---|---|---|
| **Ambient atmosphere** | | |
| washed with chlorine | 7.9x10⁵ | 2.2x10⁷ |
| fresh lactobacillus | 3.4x10² | 1.7x10³ |
| freeze-dried lactobacillus | 3.3x10² | 4.3x10³ |

| **Protective atmosphere** | | |
|---|---|---|
| washed with chlorine | 3.0x10⁵ | 5.0x10⁶ |
| fresh lactobacillus | 5.8x10² | 2.3x10³ |
| freeze-dried lactobacillus | 2.8x10³ | 3.4x10³ |

### CHICORY (Cichorium intybus)

| | Coliforms (t₀=2.4x10⁴) | Pseudomonas (t₀=7.0x10⁵) |
|---|---|---|
| **Ambient atmosphere** | | |
| washed with chlorine | 1.3x10⁶ | 2.5x10⁷ |
| fresh lactobacillus | 6.1x10⁵ | 3.6x10⁶ |
| freeze-dried lactobacillus | 8.0x10⁵ | 3.9x10⁶ |

| **Protective atmosphere** | | |
|---|---|---|
| washed with chlorine | 1.4x10⁶ | 6.0x10⁶ |
| fresh lactobacillus | 9.0x10⁴ | 7.0x10⁵ |
| freeze-dried lactobacillus | 9.2x10⁴ | 1.3x10⁵ |

### MESCLUN MIX

| | Coliforms (t₀=4.2x10²) | Pseudomonas (t₀=6.5x10⁴) |
|---|---|---|
| **Ambient atmosphere** | | |
| washed with chlorine | 4.2x10⁶ | 2.7x10⁷ |
| fresh lactobacillus | 1.8x10⁴ | 7.5x10³ |
| freeze-dried lactobacillus | 1.7x10⁴ | 4.2x10⁴ |

| **Protective atmosphere** | | |
|---|---|---|
| washed with chlorine | 1.7x10⁶ | 2.0x10⁷ |
| fresh lactobacillus | 1.0x10³ | 4.0x10³ |
| freeze-dried lactobacillus | 7.3x10³ | 6.0x10³ |

### CATALAN SALAD

| | Coliforms (t₀=3.3x10⁴) | Pseudomonas (t₀=8.7x10⁵) |
|---|---|---|
| **Ambient atmosphere** | | |
| washed with chlorine | 8.3x10⁶ | 7.6x10⁷ |
| fresh lactobacillus | 5.0x10³ | 4.2x10⁴ |
| freeze-dried lactobacillus | 4.6x10³ | 6.3x10⁴ |

| **Protective atmosphere** | | |
|---|---|---|
| washed with chlorine | 1.4x10⁶ | 5.2x10⁷ |
| fresh lactobacillus | 1.3x10³ | 2.1x10³ |
| freeze-dried lactobacillus | 2.5x10³ | 3.1x10³ |

### "POKER" (FOUR-VEGETABLE SALAD)

| | Coliforms (t₀=3.1x10³ ) | Pseudomonas (t₀=6.5x10⁵ ) |
|---|---|---|
| **Ambient atmosphere** | | |
| washed with chlorine | 1.3x10⁶ | 8.2x10⁷ |
| fresh lactobacillus | 2.9x10⁴ | 5.3x10⁴ |
| freeze-dried lactobacillus | 4.6x10⁴ | 6.7x10⁴ |

| **Protective atmosphere** | | |
|---|---|---|
| washed with chlorine | 2.5x10⁷ | 4.8x10⁷ |
| fresh lactobacillus | 2.2x10³ | 2.2x10³ |
| freeze-dried lactobacillus | 6.2x10³ | 3.6x10³ |

### Example 10

### Assessment of activity of LMG P-21007 in Category-IV vegetable products against total coliforms and fecal coliforms.

Frozen and freeze-dried LMG P-21007 was used (see Example 1).

The quantity of LMG P-21007 to be added to the product to be treated was programmed so as to obtain a cell concentration of 10⁶ CFU/ml on the product. This result was achieved by dispersing the biomass in a quantity of water proportional to the fermentation yield. Fermentation yield was calculated from the microbial count of the biomass of LMG P-21007.

The resulting aqueous bacterial suspension was nebulized on the salads.

The salads were then subjected to partial drying prior to packaging, in order to remove the excess moisture added with the nebulization process and so that the preservation conditions in the various tests were comparable.

In order to compare the microbial load of the product treated with freeze-dried or frozen biomass and the load of the product treated with chlorine, the concentrations of fecal and total coliforms were determined at time t₀ (directly after nebulization) and at the expiry of the shelf life, equal to 5+1 days after the packaging date.

The composition of the protective atmosphere was set during packaging:
- CO₂ : 10%-20%
- N₂: the remaining fraction.

The values of the samples at t₀ refer to the product washed only with potable water, without sodium hypochlorite, in order to assess whether the treatment with lactobacillus is equivalent to the treatment with chlorine.

The results obtained for the individual salads are given in the following tables:

### CORN SALAD

| | Total coliforms (t₀=1.5x10⁴) | Fecal coliforms (t₀=<10) |
|---|---|---|
| **Ambient atmosphere** | | |
| washed with chlorine | 3.5x10⁵ | (2.4x10³) |
| fresh lactobacillus | 4.0x10⁶ | (7.0x10¹) |

### ROCKET

| | Total coliforms (t₀=8.3x10⁴) | Fecal coliforms (t₀=5.0x10³) |
|---|---|---|
| **Ambient atmosphere** | | |
| washed with chlorine | 5.2x10⁶ | 4.1x10³ |
| fresh lactobacillus | 7.8x10⁴ | 6.3x10³ |

### RED CHIOGGIA CHICORY

| | Total coliforms (t₀=uncountable) | Fecal coliforms (t₀=<10) |
|---|---|---|
| **Ambient atmosphere** | | |
| washed with chlorine | 6.0x10⁶ | uncountable |
| fresh lactobacillus | 3.4x10⁶ | uncountable |

| **Protective atmosphere** | | |
|---|---|---|
| fresh lactobacillus | 2.0x10⁶ | <10 |

### LETTUCE

| | Total coliforms (t₀=3.2x10⁴) | Fecal coliforms (t₀=1.0x10⁴) |
|---|---|---|
| **Protective atmosphere** | | |
| washed with chlorine | 1.7x10⁵ | 7.7x10³ |
| fresh lactobacillus | 3.0x10⁶ | 5.0x10³ |

### ICEBERG

| | Total coliforms (t₀=uncountable) | Fecal coliforms (t₀=1.4x10²) |
|---|---|---|
| **Protective atmosphere** | | |
| washed with chlorine | 3.0x10⁵ | 2.3x10³ |
| fresh lactobacillus | 1.7x10⁶ | 2.1x10³ |

### SOY SPROUTS

| | Total coliforms (t₀=uncountable) | Fecal coliforms (t₀=uncountable) |
|---|---|---|
| **Ambient atmosphere** | | |
| washed with chlorine | 4.1x10⁶ | 5.2x10⁶ |
| fresh lactobacillus | <10⁴ | <10⁴ |

### Example 11:

### Assessment of activity of LMG P-21007 in Norwegian salmon against coliform bacteria, Listeria and Staphylococcus.

A sample of Norwegian smoked salmon was divided into three portions: a reference portion (Test), a portion which received the addition of *Listeria* spp. in the amount of 10⁵ CFU/g, and a portion which received the addition of *Listeria* spp. in the amount of 10⁵ CFU/g and *Lactobacillus* LMG P-21007 in the amount of 10⁶ CFU/g.

Monitoring of the microbial groups (coliform bacteria, Listeria and Staphylococcus) was performed every two weeks for a period of 30 days.

The results are given in the following table.

| Microbial groups | Test Salmon | | | Salmon + *Listeria* spp. | | | Salmon + *Listeria* spp. + LMG P-21007 | | |
|---|---|---|---|---|---|---|---|---|---|
| | t₀ | t₁₅ | t₃₀ | t₀ | t₁₅ | t₃₀ | t₀ | t₁₅ | t₃₀ |
| Total aerobic microbial count | 4.3x10⁶ | 6.0x10⁶ | 4.0x10⁶ | 4.3x10⁶ | 2.0x10⁷ | 4.6x10⁷ | 4.3x10⁶ | 3.0x10⁷ | 1.2x10⁷ |
| Total coliforms | <10 | <10 | <10 | <10 | <10 | <10 | <10 | <10 | <10 |
| Fecal coliforms | <10 | <10 | <10 | <10 | <10 | <10 | <10 | <10 | <10 |
| Total psychrophiles | 3.7x10⁶ | 2.0x10⁶ | 2.5x10⁶ | 3.7x10⁶ | 1.3x10⁷ | 2.2x10⁷ | 3.7x10⁶ | 1.0x10⁷ | 9.7x10⁶ |
| *Staphylococcus* spp. | 3.2x10⁵ | 6.7x10⁵ | 9.0x10⁵ | 3.2x10⁵ | 7.0x10⁵ | 5.0x10⁵ | 3.2x10⁵ | 3.0x10⁵ | 2.0x10⁵ |
| Lactic bacteria | 2.4x10⁵ | 3.0x10⁶ | 3.7x10⁷ | 2.4x10⁵ | 1.3x10⁷ | 4.5x10⁷ | 2.0x10⁶ | 3.6x10⁷ | 5.8x10⁷ |
| *Listeria* spp. | absent | absent | absent | 3.4x10⁵ | 9.0x10⁵ | 2.0x10⁶ | 3.5x10⁵ | 1.0x10⁵ | 3.0x10⁵ |

The experimental data show that the addition of *Lactobacillus* LMG P-21007 produces an inhibition of the development of *Listeria*; during the monitored preservation period, for the portion of sample inoculated only with *Listeria* there is an increase thereof by 1 log (from 10⁵ to 10⁶), while for the portion inoculated with *Listeria* and with *Lactobacillus* LMG P-21007 the level of *Listeria* is maintained at values on the order of 10⁵ CFU/g.

### Example 12:

### Assessment of activity of LMG P-21007 in Scottish salmon against coliform bacteria, Listeria and Staphylococcus.

A sample of Scottish smoked salmon was divided into three portions: a reference portion (Test), a portion which received the addition of *Listeria* spp. in the amount of 10⁵ CFU/g and a portion which received the addition of *Listeria* spp. in the amount of 10⁵ CFU/g and *Lactobacillus* LMG P-21007 in the amount of 10⁶ CFU/g.

Monitoring of bacterial groups (coliform bacteria, Listeria and Staphylococcus) was performed every two weeks for a 30-day period.

The results are presented in the following table.

| Microbial groups | Test salmon | | | Salmon + *Listeria* spp. | | | Salmon *+ Listeria* spp. + LMG P-21007 | | |
|---|---|---|---|---|---|---|---|---|---|
| | t₀ | t₁₅ | t₃₀ | t₀ | t₁₅ | T₃₀ | t₀ | t₁₅ | t₃₀ |
| Total aerobic microbial count | 1.0x10⁵ | 1.4x10⁸ | 8.0x10⁸ | 3.0x10⁵ | 1.3x10⁸ | 4.0x10⁸ | 3.0x10⁵ | 1.3x10⁸ | 2.0x10⁸ |
| Total coliforms | <10 | 1.1x10² | <10 | <10 | 9.0x10¹ | <10 | <10 | 2.0x10¹ | <10 |
| Fecal coliforms | <10 | <10 | <10 | <10 | <10 | <10 | <10 | <10 | <10 |
| Total psychrophiles | 9.0x10⁴ | 1.0x10⁸ | 4.0x10⁸ | 9.0x10⁴ | 9.0x10⁷ | 1.0x10⁸ | 9.0x10⁴ | 8.0x10⁷ | 1.2x10⁸ |
| *Staphylococcus* spp. | 2.0x10³ | 2.2x10⁶ | 4.6x10⁷ | 2.0x10³ | 2.4x10⁵ | 7.0x10⁵ | 2.0x10³ | 4.0x10⁴ | 7.3x10⁴ |
| Lactic bacteria | 3.0x10⁵ | 5.0x10⁷ | 6.7x10⁷ | 3.0x10⁵ | 8.0x10⁷ | 9.3x10⁷ | 4.8x10⁶ | 1.3x10⁸ | 1.6x10⁸ |
| *Listeria* spp. | absent | absent | absent | 2.0x10⁵ | 4.0x10⁵ | 8.7x10⁵ | 2.0x10⁵ | 2.3x10⁴ | 4.2x10⁴ |

The experimental data show that the addition of *Lactobacillus* LMG P-21007 produces an inhibition of the development of *Listeria* and *Staphylococcus;* during the monitored preservation period, for the portion of sample inoculated only with *Listeria,* the population remains at levels on the order of 10⁵ CFU/g, while for the portion inoculated with *Listeria* and with *Lactobacillus* LMG P-21007 the level of *Listeria* decreases, passing from values on the order of 10⁵ CFU/g to values on the order of 10⁴ CFU/g and the level of *Staphylococcus* is lower than the level observed in all the other samples (on the order of 10⁴ CFU/g, versus 10⁶ CFU/g of the test portion and 10⁵ CFU/g of the portion inoculated with *Listeria*).

### Example 13:

### Assessment of activity of LMG P-21007 in Scottish salmon against coliform bacteria, Listeria, Staphylococcus, Enterococcus and Pseudomonas.

A sample of Scottish smoked salmon was divided into three portions: a reference portion (Test), a portion which received the addition of *Listeria* spp. in the amount of 10⁵ CFU/g and a portion which received the addition of *Listeria* spp. in the amount of 10⁵ CFU/g and *Lactobacillus* LMG P-21007 in the amount of 10⁶ CFU/g.

Monitoring of the bacterial groups (coliform bacteria, Listeria and Staphylococcus) was performed every two weeks for a 30-day period.

The results are presented in the following table.

| Microbial groups | Test salmon | | | Salmon + *Listeria* spp. | | | Salmon + *Listeria* spp. + LMG P-21007 | | |
|---|---|---|---|---|---|---|---|---|---|
| | t₀ | t₁₅ | t₃₀ | t₀ | t₁₅ | t₃₀ | t₀ | t₁₅ | t₃₀ |
| Total aerobic microbial count | 1.2x10⁴ | 1.0x10⁶ | 7.0x10⁶ | 1.2x10⁴ | 8.7x10⁷ | 1.7x10⁸ | 1.2x10⁴ | 3.8x10⁷ | 4.6x10⁷ |
| Total coliforms | <10 | <10 | <10 | <10 | <10 | <10 | <10 | <10 | <10 |
| Fecal coliforms | <10 | <10 | <10 | <10 | <10 | <10 | <10 | <10 | <10 |
| *Enterococcus spp* | 6.1x10¹ | 5.3x10³ | 6.3x10⁵ | 6.1x10¹ | 6.2x10³ | 5.8x10⁵ | 6.1x10¹ | 4.5x10³ | 1.8x10⁴ |
| *Pseudomonas spp.* | 2.3x10³ | 3.0x10⁴ | 2.5x10⁴ | 2.3x10³ | 6.0x10⁴ | 5.0x10⁴ | 2.3x10³ | 6.4x10⁴ | 6.2x10⁴ |
| *Staphylococcus spp.* | 2.0x10⁴ | 2.6x10⁶ | 3.5x10⁶ | 2.0x10⁴ | 5.4x10⁵ | 1.2x10⁶ | 2.0x10⁴ | 2.7x10⁴ | 1.9x10⁵ |
| Lactic bacteria | 6.2x10³ | 3.5x10⁵ | 7.3x10⁵ | 6.2x10³ | 6.3x10⁵ | 8.5x10⁵ | 8.2x10⁶ | 7.0x10⁶ | 9.1x10⁶ |
| *Listeria* spp | absent | absent | absent | 2.5x10⁵ | 1.9x10⁶ | 5.1x10⁶ | 2,.510⁵ | 3.0x10⁵ | 1.2x10⁵ |

The experimental data show that the addition of *Lactobacillus* LMG P-21007 produces an inhibition of the development of *Listeria* and of *Staphylococcus;* during the monitored preservation period; for the portion of sample inoculated only with *Listeria,* the population in fact rises from levels on the order of 10⁵ CFU/g to levels on the order of 10⁶ CFU/g, while for the portion inoculated with *Listeria* and with *Lactobacillus* LMG P-21007 the level of *Listeria* remains at values on the order of 10⁵ CFU/g and the level of *Staphylococcus,* while increasing, still remains lower than the level observed in all the other samples.

### Example 14:

### Effect of the addition of Lactobacillus LMG P-21007 (10⁶) on the development of Listeria spp. inoculated in a sample of smoked salmon, after 30 days of preservation at 4 °C in vacuum.

| Type of salmon | Concentration of *Listeria* spp. in the Test portion | Concentration of *Listeria* spp. in the sample inoculated with *Listeria* spp. and *Lactobacillus* LMG P-21007 | Variation in log after preservation at 4 °C in vacuum for 30 days |
|---|---|---|---|
| Scottish | 2.9x10⁶ | 3.4x10⁴ | - 2 log |
| Scottish | 7x10⁷ | 2.8x10⁴ | - 3 log |
| Scottish | 3.4x10⁷ | 1.2x10⁵ | -2 log |
| Scottish | 3.4x10⁷ | 4x10⁴ | -3 log |
| Irish | 6.7x10⁵ | 8x10⁴ | - 1 log |
| Irish | 4.6x10⁶ | 3x10⁴ | - 2 log |
| Irish | 1.2x10⁶ | 2.4x10⁴ | - 2 log |
| Irish | 1x10⁵ | 3 x10³ | - 2 log |
| Norwegian | 3.2x10⁶ | 6.1x10⁵ | - 1 log |
| Norwegian | 2.4x10⁵ | 1.2x10⁴ | - 1 log |
| Irish | 3x10⁵ | 1.7x10⁴ | - 1 log |

### Example 15:

### Effect of the addition of Lactobacillus LMG P-21007 (10⁶) on the development of Staphylococcus spp. in a sample of smoked salmon, after 30 days of preservation at 4 °C in vacuum.

| Type of salmon | Concentration of *Staphylococcus* spp. in the Test portion | oncentration of *Staphylococcus* spp. in the sample inoculated with *Lactobacillus* LMG P-21007 | Variation in log after preservation at 4 °C in vacuum for 30 days |
|---|---|---|---|
| Scottish | 4.2x10 ⁷ | 2.1x10 ⁶ | -1 log |
| Scottish | 5.2x10 ⁶ | 8.3x10 ³ | -3 log |
| Scottish | 3.1x10 ⁷ | 7.2x10 ⁴ | -3 log |
| Scottish | 2.7x10 ⁶ | 7x10 ⁴ | -2 log |
| Irish | 4.5x10 ⁶ | 3x10 ⁵ | -1 log |
| Irish | 6.2x10 ⁵ | 3.2x10 ⁵ | 0 log |
| Irish | 7.1x10 ⁶ | 3.2x10 ⁵ | - 1 log |
| Irish | 3.5x10 ⁵ | 1.6x10 ⁶ | + 1 log |
| Norwegian | 2.2x10 ⁷ | 8x10 ⁵ | - 2 log |
| Norwegian | 2x10 ⁵ | 7x10 ⁵ | 0 log |
| Irish | 3x10 ⁵ | 1.7x10 ⁴ | - 1 log |

## Claims

1. Microorganism of the class of non-spore-forming microaerophilic Gram-positive bacteria, of the genus *Lactobacillus,* species *casei,* type strain LMG P-21007 for preserving vegetable products, fish products and animal-derived products, mixtures thereof and derivatives of vegetable products, fish products and animal-derived products and mixtures thereof.

2. The microorganism according to claim 1, **characterized by** a development temperature between 20 °C and 44 °C.

3. The microorganism according to claim 2, **characterized by** a development temperature between 25 °C and 44 °C.

4. The microorganism according to claim 3, **characterized by** a development temperature of 37°C.

5. Use of the microorganism according to claim 1 to preserve vegetable products, fish products and animal-derived products, mixtures thereof and derivatives of vegetable products, fish products and animal-derived products and mixtures thereof.

6. Use of the microorganism according to claim 1 to control the decaying bacterial load.

7. Use of the microorganism according to claim 1 to control the pathogenic bacterial load.

8. Use of the microorganism according to claims 5, 6 or 7 in ambient atmosphere or protective atmosphere.

9. Use of the microorganism according to claim 8, wherein the protective atmosphere has the following composition:
- CO₂ : 10%-20%
- N₂: the remaining fraction.

10. Use of the microorganism according to claims 5, 6 or 7 wherein the activity temperature is between 4 °C and 44 °C.

11. Use of the microorganism according to claim 10, wherein the activity temperature is between 4 °C and 12 °C.

12. Use of the microorganism according to claim 10, wherein the activity temperature is between 4 °C and 8 °C.

13. Use of the microorganism according to claims 5, 6 or 7, wherein the microorganism is fresh, frozen or freeze-dried.

14. Use of the microorganism according to claims 5, 6 or 7, wherein the vegetable products belong to categories I, IV or V.

15. Use of the microorganism according to claim 14, wherein the vegetable products of categories I, IV and V and mixtures thereof are horticultural products.

16. Use of the microorganism according to claim 15, wherein the horticultural products are salads or mixtures of salads.

17. Use of the microorganism according to claims 5, 6 or 7, wherein the fish products and animal-derived products are flesh of fish, shellfish, mollusks, meat of poultry, bovines, swine, equines and ovines.

18. Use of the microorganism according to claim 17, wherein the fish flesh is salmon flesh.

19. Use of the microorganism according to claims 5, 6 or 7, wherein the derivatives of the vegetable products, fish products and animal-derived products are juices, concentrates, sauces and preserves thereof.

20. Use of the microorganism according to claims 5, 6 or 7 to control the bacterial load of coliform bacteria.

21. Use of the microorganism according to claims 5, 6 or 7 to control the bacterial load of bacteria of the group of *Enterococci, Pseudomonas Daceae, Staphylococcus* and *Listeria*.

22. A food product comprising the microorganism according to claim 1 and at least one vegetable product, fish product or animal-derived product, or at least one derivative of at least one vegetable product, fish product or animal-derived product.

23. The food product according to claim 22, wherein the vegetable products and the mixtures thereof belong to categories I, IV and V.

24. The product according to claim 23, wherein the vegetable products and the mixtures thereof are horticultural products.

25. The food product according to claim 24, wherein the horticultural products are salads or mixtures of salads.

26. The food product according to claim 22, wherein the fish products or animal-derived products and the mixtures thereof are flesh of fish, shellfish, mollusks, meat of poultry, swine, equines, bovines and ovines.

27. The food product according to claim 26, wherein the fish flesh is salmon flesh.

## Patentansprüche

1. Mikroorganismus der Klasse nicht-sporenbildender, mikroaerophiler, Gram-positiver Bakterien der Gattung Lactobacillus, Spezies casei, Stamm vom Typ LMG P21007 zur Konservierung von Gemüseprodukten, Fischprodukten und von Tieren stammenden Produkten, Mischungen davon und Derivaten von Gemüseprodukten, Fischprodukten und von Tieren stammenden Produkten sowie Mischungen davon.

2. Mikroorganismus nach Anspruch 1, **gekennzeichnet durch** eine Entwicklungstemperatur zwischen 20 °C und 44 °C.

3. Mikroorganismus nach Anspruch 2, **gekennzeichnet durch** eine Entwicklungstemperatur zwischen 25 °C und 44 °C.

4. Mikroorganismus nach Anspruch 3, **gekennzeichnet durch** eine Entwicklungstemperatur von 37 °C.

5. Verwendung des Mikroorganismus nach Anspruch 1 zur Konservierung von Gemüseprodukten, Fischprodukten und von Tieren stammenden Produkten, Mischungen davon und Derivaten von Gemüseprodukten, Fischprodukten und von Tieren stammenden Produkten sowie Mischungen davon.

6. Verwendung des Mikroorganismus nach Anspruch 1 zur Steuerung der sich zersetzenden Bakterienlast.

7. Verwendung des Mikroorganismus nach Anspruch 1 zur Steuerung der pathogenen Bakterienlast.

8. Verwendung des Mikroorganismus nach einem der Ansprüche 5, 6 oder 7 in einer Umgebungsatmosphäre oder Schutzatmosphäre.

9. Verwendung des Mikroorganismus nach Anspruch 8, wobei die Schutzatmosphäre folgende Zusammensetzung aufweist:
- CO2: 10%-20%
- N2: verbleibender Rest.

10. Verwendung des Mikroorganismus nach einem der Ansprüche 5, 6 oder 7, wobei die Aktivitätstemperatur zwischen 4 °C und 44 °C liegt.

11. Verwendung des Mikroorganismus nach Anspruch 10, wobei die Aktivitätstemperatur zwischen 4 °C und 12 °C liegt.

12. Verwendung des Mikroorganismus nach Anspruch 10, wobei die Aktivitätstemperatur zwischen 4 °C und 8 °C liegt.

13. Verwendung des Mikroorganismus nach einem der Ansprüche 5, 6 oder 7, wobei der Mikroorganismus frisch, gefroren oder gefriergetrocknet ist.

14. Verwendung des Mikroorganismus nach einem der Ansprüche 5, 6 oder 7, wobei die Gemüseprodukte zu den Kategorien I, IV oder V gehören.

15. Verwendung des Mikroorganismus nach Anspruch 14, wobei die Gemüseprodukte der Kategorien I, IV und V sowie Mischungen davon Gartenbauprodukte sind.

16. Verwendung des Mikroorganismus nach Anspruch 15, wobei die Gartenbauprodukte Salate oder Salatmischungen sind.

17. Verwendung des Mikroorganismus nach einem der Ansprüche 5, 6 oder 7, wobei die Fischprodukte und die von Tieren stammenden Produkte Fischfilets, Schalentiere, Weichtiere, Geflügel-, Rind-, Schweine-, Pferde- und Schaffleisch sind.

18. Verwendung des Mikroorganismus nach Anspruch 17, wobei die Fischfilets Lachsfilets sind.

19. Verwendung des Mikroorganismus nach einem der Ansprüche 5, 6 oder 7, wobei die Derivate der Gemüseprodukte, Fischprodukte und von Tieren stammenden Produkte Säfte, Konzentrate, Saucen und Konserven davon sind.

20. Verwendung des Mikroorganismus nach einem der Ansprüche 5, 6 oder 7 zur Steuerung der Bakterienlast coliformer Bakterien.

21. Verwendung des Mikroorganismus nach einem der Ansprüche 5, 6 oder 7 zur Steuerung der Bakterienlast von Bakterien aus der Gruppe Enterococci, Pseudomonas Daceae, Staphylococcus und Listeria.

22. Den Mikroorganismus umfassendes Nahrungsmittelprodukt nach Anspruch 1 und mindestens ein Gemüseprodukt, Fischprodukt oder von Tieren stammendes Produkt oder mindestens ein Derivat von mindestens einem Gemüseprodukt, Fischprodukt oder von Tieren stammenden Produkt.

23. Nahrungsmittelprodukt nach Anspruch 22, bei dem die Gemüseprodukte und die Mischungen davon zu den Kategorien I, IV und V gehören.

24. Produkt nach Anspruch 23, wobei die Gemüseprodukte und die Mischungen davon Gartenbauprodukte sind.

25. Nahrungsmittelprodukt nach Anspruch 24, wobei die Gartenbauprodukte Salate oder Salatmischungen sind.

26. Nahrungsmittelprodukt nach Anspruch 22, wobei die Fischprodukte oder von Tieren stammenden Produkte und die Mischungen davon Fischfilets, Schalentiere, Weichtiere, Geflügel-, Rind-, Schweine-, Pferde- und Schaffleisch sind.

27. Nahrungsmittelprodukt nach Anspruch 26, wobei die Fischfilets Lachsfilets sind.

## Revendications

1. Micro-organisme de la classe des bactéries Gram positif microaérophiles non sporulées, du genre *Lactobacillus,* de l'espèce *casei,* de souche du type LMG P-21007 pour préserver les produits du règne végétal, les produits du poisson et les produits dérivés d'animaux, des mélanges de ceux-ci et des dérivés des produits du règne végétal, des produits du poisson et des produits dérivés d'animaux et des mélanges de ceux-ci.

2. Micro-organisme selon la revendication 1, **caractérisé par** une température de développement comprise entre 20 °C et 44 °C.

3. Micro-organisme selon la revendication 2, **caractérisé par** une température de développement comprise entre 25 °C et 44 °C.

4. Micro-organisme selon la revendication 3, **caractérisé par** une température de développement de 37 °C.

5. Utilisation du micro-organisme selon la revendication 1 pour préserver les produits du règne végétal, les produits du poisson et les produits dérivés d'animaux, des mélanges de ceux-ci et des dérivés des produits du règne végétal, des produits du poisson et des produits dérivés d'animaux et des mélanges de ceux-ci.

6. Utilisation du micro-organisme selon la revendication 1, pour contrôler la charge bactérienne de décomposition.

7. Utilisation du micro-organisme selon la revendication 1 pour contrôler la charge bactérienne pathogène.

8. Utilisation du micro-organisme selon la revendication 5, 6 ou 7 dans l'air ambiant ou une atmosphère protectrice.

9. Utilisation du micro-organisme selon la revendication 8, dans laquelle l'atmosphère protectrice possède la composition suivante :
- CO₂ : 10 % à 20 %
- N₂ : la fraction restante.

10. Utilisation du micro-organisme selon la revendication 5, 6 ou 7, dans laquelle la température d'activité est comprise entre 4 °C et 44 °C.

11. Utilisation du micro-organisme selon la revendication 10, dans laquelle la température d'activité est comprise entre 4 °C et 12 °C.

12. Utilisation du micro-organisme selon la revendication 10, dans laquelle la température d'activité est comprise entre 4 °C et 8 °C.

13. Utilisation du micro-organisme selon la revendication 5, 6 ou 7, dans laquelle le micro-organisme est frais, congelé ou lyophilisé.

14. Utilisation du micro-organisme selon la revendication 5, 6 ou 7, dans laquelle les produits du règne végétal appartiennent aux catégories I, IV ou V.

15. Utilisation du micro-organisme selon la revendication 14, dans laquelle les produits du règne végétal des catégories I, IV et V et des mélanges de ceux-ci sont des produits horticoles.

16. Utilisation du micro-organisme selon la revendication 15, dans laquelle les produits horticoles sont des salades ou des mélanges de salades.

17. Utilisation du micro-organisme selon la revendication 5, 6 ou 7, dans laquelle les produits du poisson et les produits dérivés d'animaux sont de la chair de poisson, des crustacés, des mollusques, de la viande de volaille, de bovins, de porc, de chevaux et d'ovins.

18. Utilisation du micro-organisme selon la revendication 17, dans laquelle la chair de poisson est de la chair de saumon.

19. Utilisation du micro-organisme selon la revendication 5, 6 ou 7, dans laquelle les dérivés des produits du règne végétal, des produits du poisson et des produits dérivés d'animaux sont des jus, des concentrés, des sauces et des conserves de ceux-ci.

20. Utilisation du micro-organisme selon la revendication 5, 6 ou 7 pour contrôler la charge bactérienne de bactéries coliformes.

21. Utilisation du micro-organisme selon la revendication 5, 6 ou 7 pour contrôler la charge bactérienne de bactéries du groupe des *Enterococci, Pseudomonas Daceae, Staphylococcus* et *Listeria*.

22. Denrée alimentaire comprenant le micro-organisme selon la revendication 1 et au moins un produit du règne végétal, un produit du poisson ou un produit dérivé d'animaux, ou au moins un dérivé d'au moins un produit du règne végétal, un produit du poisson ou un produit dérivé d'animaux.

23. Denrée alimentaire selon la revendication 22, dans laquelle les produits du règne végétal et les mélanges de ceux-ci appartiennent aux catégories I, IV et V.

24. Denrée alimentaire selon la revendication 23, dans lequel les produits du règne végétal et les mélanges de ceux-ci sont des produits horticoles.

25. Denrée alimentaire selon la revendication 24, dans laquelle les produits horticoles sont des salades ou des mélanges de salades.

26. Denrée alimentaire selon la revendication 22, dans lequel les produits du poisson ou les produits dérivés d'animaux et les mélanges de ceux-ci sont la chair de poisson, les crustacés, les mollusques, la viande de volaille, de porc, de chevaux, de bovins et d'ovins.

27. Denrée alimentaire selon la revendication 26, dans laquelle la chair de poisson est de la chair de saumon.
